# EUROPEAN PATENT SPECIFICATION

(11) **EP 2 377 327 B1**
(45) Date of publication and mention of the grant of the patent: **11.04.2018**
(21) Application number: 10700184.4
(22) Date of filing: 07.01.2010
(51) Int. Cl.: H04Q 11/04, H04M 11/06, H04B 3/46, H04L 12/24, H04L 12/28, H04L 5/00

(54) **DYNAMIC LINE MANAGEMENT**
DYNAMISCHE LINIENVERWALTUNG
GESTION DE LIGNE DYNAMIQUE

(30) Priority: 15.01.2009 EP 09250100
(43) Date of publication of application: 19.10.2011
(73) Proprietor: British Telecommunications public limited company, London EC1A 7AJ (GB)
(72) Inventor: COOPER, Ian, Robert, Suffolk IP5 2EW (GB)
(74) Representative: British Telecommunications public limited company Intellectual Property Department
(86) International application number: PCT/GB2010/000013
(87) International publication number: WO 2010/082014

(56) References cited:
- KEE BONG SONG ET AL: "Dynamic Spectrum Management for Next-Generation DSL Systems" IEEE COMMUNICATIONS MAGAZINE, IEEE SERVICE CENTER, PISCATAWAY, US, vol. 40, no. 10, 1 October 2002 (2002-10-01), pages 101-109, XP011092935 ISSN: 0163-6804
- VANBLEU K: "Advanced Equalization Techniques for DMT-Based Systems" [Online] October 2004 (2004-10), PH.D. DISSERTATION, , KATHOLIEKE UNIVERSITEIT LEUVEN , XP002539994 Retrieved from the Internet: URL:http://www.arehna.di.uoa.gr/thesis/upl oaded_data/Advanced_equalization_technique s_for_DMT_based_systems_2004_thesis_122302 3387.pdf> [retrieved on 2009-08-03] page 9 - page 11 page 23 - page 26 * Especially: Page 9, lastparagraph Page11; figure1.4 Page 26, line 7 *
- ANONYMOUS: "ADSL2 and ADSL2+ - The new ADSL standards" WHITE PAPER, AWARE, [Online] October 2006 (2006-10), pages 1-8, XP002540174 Retrieved from the Internet: URL:www.ictregulationtoolkit.org/en/Docume nt.2942.pdf> [retrieved on 2009-08-03]
- ANONYMOUS: "Asymmetric Digital Subscriber Line (ADSL) transceivers - Extended bandwidth ADSL2 (ADSL2+); G.992.5 (05/03); Asymmetrical Digital Subscriber Line (ADSL) transceivers - Extended bandwidth ADSL2 (ADSL2+)" ITU-T G.992.5, May 2003 (2003-05), XP017401228

## Description

This invention relates to telecommunications systems and in particular to the management of network equipment interfacing between a network and individual customer premises systems. Such equipment is widely dispersed geographically, and has to operate without direct human supervision and in a wide variety of environments and circumstances.

The increasing use of radio-based communications systems can cause significant impairment of the signal in the wired network, as the wires themselves act as antennas, and the resulting RF signals can interfere with transmissions in the system. This is particularly so as the frequencies in use in the wired network rise above the 2.2MHz currently in use for ADSL2+ (Asymmetric digital subscriber Line) to 7.05MHz for VDSL2 (very high rate digital subscriber loop) and then 30MHz or even 300MHz for future proposed DSL systems.

It is known for notches to be put into the RF spectrum to prevent DSL transmission on bands in which radio transmitters are known or discovered to be operating - see the ITU-T standard G992.5.

It is also known, for example from Kee Bong Song et al, ("Dynamic Spectrum Management for Next-Generation DSL Systems": IEEE Magazine October 2002) to monitor a digital subscriber loop (DSL) system for interference (cross talk) between transmitters connected to the systems, (far end cross talk and near end cross talk, "FEXT' and "NEXT"), and manage the spectrum on the system accordingly.

According to the invention, there is provided a dynamic line management system for a digital subscriber loop telecommunications network for carrying data between a remote access server and a plurality of individual network terminations over connections which use electrical connections for at least part of their length, comprising a data collection system for identifying radio frequencies used by wireless transmitters in the vicinity of each electrical connection, and a transmission management system for managing the spectrum of transmission frequencies carried over the respective digital subscriber loops to prevent transmission in frequency ranges in which nearby radio transmitters are operating, characterised in that the data collection system comprises, at each of two or more nodes in the electrical part of the network, data collection apparatus for collection of data relating to the RF environment at the respective nodes, and wherein each such node also comprises a data exchange system to allow such data collected locally to each node to be exchanged between the nodes.

According to another aspect, there is provided a method of controlling a digital subscriber loop telecommunications network for carrying data between a remote access server and a plurality of individual network terminations over connections which use electrical connections for at least part of their length, comprising the steps of identifying radio frequencies used by wireless transmitters in the vicinity of each electrical connection, and controlling transmission frequencies carried over the respective digital subscriber loops to prevent transmission on frequencies in which nearby radio transmitters are operating, characterised in that data relating to the RF environment is collected at each of two or more nodes in the electrical part of the network, and such data is exchanged between the nodes.

Thus, if there is a known wireless interferer in the vicinity then the attempted use of the relevant frequencies for incoming traffic can be prevented, by transmitting this information to neighbouring remote nodes to update their 'picture' of the local RF 'signature' for that particular region.

The invention can be implemented at any level of the distribution system, but is preferable implemented in each local remote node of a Fibre to the Distribution Point system, at the point where the signals switch from the optical domain to the electrical domain and vice versa. Thus each remote node can respond to its own RF environment, reducing the signalling overhead as some of the data it requires is measured locally.

It would be possible to train an initial artificial neural network such as a Multilayer Perceptron (MLP) to operate a dynamic line management (DLM) system with some default initial values. If the Radio Frequency ingress and egress conditions could be considered prior to the commencement of the training of each local MLP, this would allow rapid convergence to a locally trained MLP at each node. This RF augmentation information could contain the following data:
- local radio & TV broadcast transmitters and estimations of reception powers at the remote node location,
- geographical remote node location with regards to typical RF interference experienced at that point,
- local sources of repetitive RF interference obtained from the RF section of the MLPs from neighbouring remote nodes,
- local radio amateur frequencies obtained via post-code information in relation to the remote node location. This may be relevant both to avoid interference on the DSL caused by the local radio amateurs, but also to avoid causing interference to the relatively weak signals which the local radio amateur users are trying to detect.

This invention can be implemented in a module of the DLM system for use in the decision making process, by providing information on how the profiles can be best adapted for the prevailing RF environment. For example a specific "notch" can be applied in the DSL RF spectrum if a local radio amateur is transmitting at that frequency (ingress control) or put a notch in the spectrum if a local radio amateur is attempting to listen at that frequency (egress control). In addition the RF module is able to consider the RF situation at neighbouring remote nodes and use this information to augment its local knowledge of the RF environment.

Embodiments of the invention will now be discussed, by way of example, with reference to the drawings, in which:
Figure 1 depicts a conventional digital subscriber loop system
Figure 2 depicts a fibre-to-the-data-point system
Figure 3 shows the functional elements that co-operate to implement the invention.
Figure 4 shows how a module to perform these functions is integrated into a dynamic line management system implemented in a node of a FttDP system.

It should be understood that these Figures illustrate the functional elements of the system, which may in practice be embodied in one or more electronic components or in software.

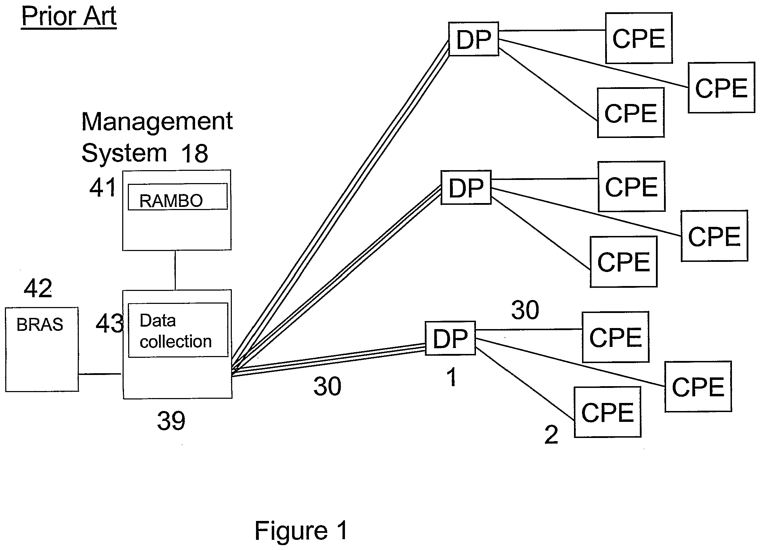

As shown in Figure 1, in conventional Digital Subscriber Loop (DSL) services, provided from the exchange 39 (or cabinet), each customer premises 2 has a dedicated physical connection 30 to the DSL access multiplexer (DSLAM) 31 in the exchange 39. The connections from the exchange 39 to several different customer premises 2 may pass through a single distribution point 1, but each connection is a complete end-to-end connection.

A management system 18 can be provided to optimise the service for each customer by maximising the data rate over the physical layer 30 (subject to a predetermined maximum) whilst maintaining the stability of the line. This is achieved for each line using a Dynamic Line Management (DLM) system and a Rate Adaptive Management Box (RAMBo) 41 which automatically selects the optimum rate profile for each line. The chosen profile rate (upstream and downstream) supported by the line is also applied to the BRAS (Broadband Remote Access Server) 42 serving the user connection 32 so that the services provided over the DSL line 30 match the physical capabilities of the line. The BRAS is not located at the exchange but is located deeper in the network. It can handle many thousands of lines and would provide the broadband services for many exchanges).

The physical layer connectivity is provided by a Digital subscriber line access multiplexer (DSLAM) capped at a predetermined rate limit, e.g. 5Mbit/s, and the BRAS provides the services to the DSLAM so that the services are capped to the same rate limit so that there is rate matching between the physical line and the services that are applied over that line.

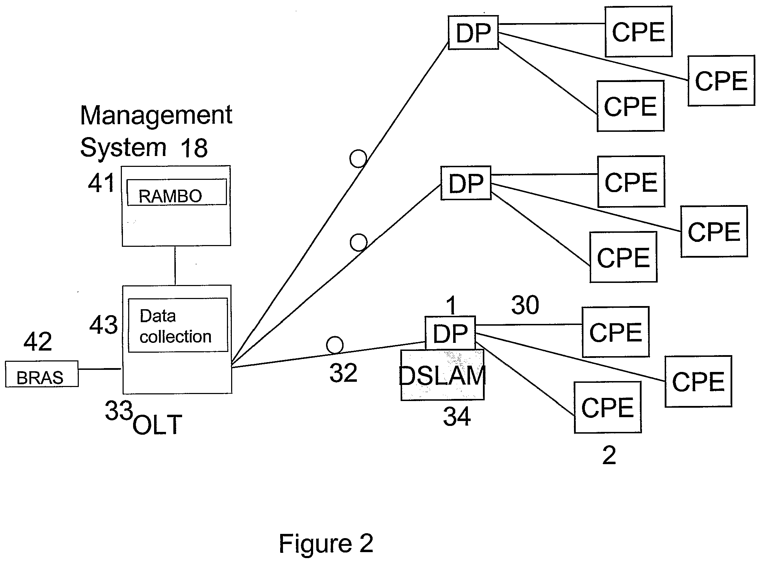

Figure 2 depicts a fibre-to-the-distribution-point (FttDP) system. In such systems the connections 32 between the optical line terminal 33 in the exchange and the individual distribution points 1 are provided by optical fibre, each carrying the traffic for all the final drop connections 30 served by that distribution point. This allows the distribution point to serve a large number of customer premises. Instead of a single DSLAM 31 providing the line statistics for thousands of lines at one convenient location, there could be a large number of remote nodes 1 (located at the distribution points), each provisioning between 8 and 24 lines.

Because of the transition between optical fibre and electrical "copper" connections at the distribution points, they have more capabilities than a typical copper-to-copper distribution point. Essentially the modem conventionally located in the DSLAM 31 at the exchange 39 is instead located in a mini-DSLAM 34 at the DP 1 (only shown for one DP in Figure 2). Thus the DSLAM 31 and BRAS 42 functions are no longer co-located.

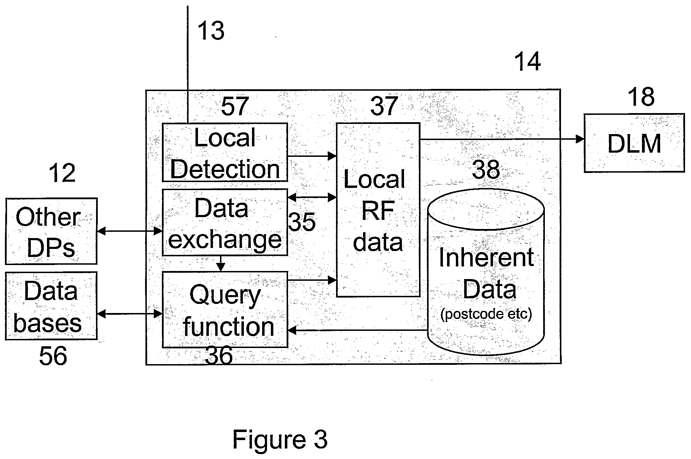

Figure 3 depicts a RF interference compensating module 14 which is in communication with a dynamic line management system 18, and is also capable of exchanging data with similar modules 12 associated with the dynamic line management systems of other points in the network. It has means 13 for monitoring the local RF environment. The module 14 includes a store 38 of data relevant to its location, such as its geographical co-ordinates, postal code, or the like. This data may be entered manually or derived from a global positioning sensor or the like.

The module 14 also includes a query function 36 which interrogates a central database 56 to identify known sources of RF signals in the area identified by the data in the store 38 - for example details of local radio amateur frequencies obtained via post-code information, and details of local radio & TV broadcast transmitters and estimations of reception powers. This is supplemented by data discovered by the modules own detection system 57 and exchanged with data from neighbouring nodes 12.

The collected data is collated and stored in a memory, to identify the local RF environment. This information is used to control the RF frequencies used by the dynamic line management system 18. The data can be updated periodically as local conditions can change.

The data exchange function 35 also retrieves data from the memory 37 for transmission to the neighbouring nodes 12.

As shown in Figure 1, in conventional Digital Subscriber Loop (DSL) services, provided from the exchange 39 (or cabinet), each customer premises 2 has a dedicated physical connection 30 to the DSL access multiplexer 31 in the exchange. The connections from the exchange 39 to several different customer premises 2 may pass through a single distribution point 1, but each connection is a complete end-to-end connection.

A management system 18 can be provided to optimise the service for each customer by maximising the data rate over the physical layer 30 (subject to a predetermined maximum) whilst maintaining the stability of the line. This is achieved for each line using a Dynamic Line Management (DLM) system 40 coupled to a Rate Adaptive Management Box (RAMBo) 41 which automatically selects the optimum rate profile for each line. The chosen profile rate (upstream and downstream) supported by the line is also applied to the BRAS (Broadband Remote Access Server) 42 at the exchange end of the connection 32 so that the services provided over the DSL line 30 match the physical capabilities of the line.

Figure 2 illustrates a fibre-to-the-distribution-point (FttDP) system. In such systems the connections 32 between the Digital subscriber line access multiplexer (DSLAM) 31 in the exchange and the individual distribution points 1 are provided by optical fibre, each carrying the traffic for all the final drop connections 30 served by that distribution point. This allows the distribution point to serve a large number of customer premises.

Because of the transition between optical fibre and electrical "copper" connections at the distribution points, the distribution points have more capabilities than a typical copper-to-copper distribution point. Essentially the modem normally located in the DSLAM at the exchange is instead located in a mini-DSLAM at the DP. Therefore as well have having some active electronics at the DP, some intelligence can be added to make this mini-DSLAM autonomous with regards to setting its own maximum stable DSL rate. This allows the line characteristics to be measured at the distribution points.

The DSL modem located at the distribution point has the ability to draw statistics both from itself and the equivalent modem on the other end of the local loop located at the customer premises (i.e. it gathers both upstream and downstream line performance statistics) - therefore the data to perform dynamic line management (DLM) is available at the local node and it should be most efficient if this data can be processed locally at the distribution points, and any subsequent change of DLM profile implemented locally. This approach also allows macro decisions on DLM profile choice to be made by gathering data from neighbouring nodes. All of this would be possible with a central data collection system, but this would add to the operations, administration, and maintenance overhead that the network has to carry and requires a data warehouse and large central processing capabilities.

Each distribution point has to transmit the periodically-gathered statistics back to a remote data collector associated with the central management function 18.

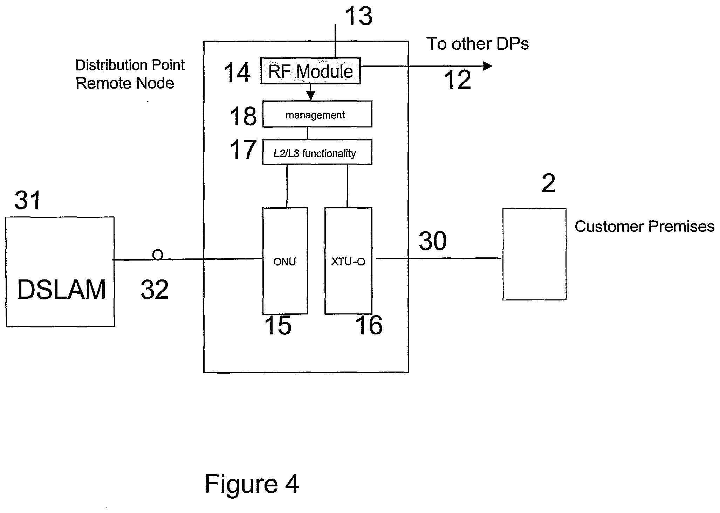

Figure 4 depicts a node 1 (distribution point) having a wired connection 30 to customer premises equipment 2 and an optical connection 32 to a Digital subscriber line access multiplexer (DSLAM) 31. Each wired customer connection is connected to an xDSL Transmission Unit (Optical) (XTU-O) 16, and the optical connection 32 is connected through an optical network unit (ONU) 15. These are interlinked by a interface unit 17 for handling functionality at levels 2 and 3 of the standard OSI seven-level model, under the control of a dynamic line management system 18. This function includes the multiplexing/demultiplexing of the various customer lines over the optical connection 32.

Having a local Dynamic line management system 18 in each node reduces the requirement for processing power, memory storage requirements, and communications back to a central DLM controller.

It should be understood that the implementation depicted in Figure 4 is an example. The functional elements are shown as co-located, but some functions may in be performed centrally by the DSLAM or in some distributed system, using local inputs from the customer premises terminals.

The dynamic line management system may be operated under the control of a multi-layer perceptron (neural net) as described in the applicant's co-pending International application entitled *Management of Telecommunications Connections,* claiming priority from European Patent application 09250095.8, filed on the same date as the present application, and subsequently published as WO2010/082016.

## Claims

1. A dynamic line management system (18) for a digital subscriber loop telecommunications network (30, 32) for carrying data between a remote access server (42) and a plurality of individual network terminations (2) over connections which use electrical connections (30) for at least part of their length, comprising a data collection system (43, 57) for identifying radio frequencies used by wireless transmitters in the vicinity of each electrical connection, and a transmission management system (37) for managing the spectrum of transmission frequencies carried over the respective digital subscriber loops to prevent transmission in frequency ranges in which nearby radio transmitters are operating, **characterised in that** the data collection system (43, 57) comprises, at each of two or more nodes (1, 2,) in the electrical part of the network, data collection apparatus (13) for collection of data relating to the RF environment at the respective nodes, and wherein each such node also comprises a data exchange system (35) to allow such data collected locally to each node to be exchanged between the nodes.

2. A system according to claim 1, comprising one or more receivers (13) for detecting wireless transmissions in the vicinity of the nodes.

3. A system according to claim 1 or 2 comprising a data collection system (56) for identifying and storing data relating to radio frequencies used by transmitters in the vicinity of the nodes.

4. A system according to claim 1, claim 2 or claim 3, comprising a spectrum controller responsive to the output of the dynamic line management system to place a notch at a specified frequency in the RF spectrum of transmissions to be made over an individual digital subscriber loop (30), in response to the identification of a radio transmitter or receiver operational at that frequency in the vicinity of the digital subscriber loop (30).

5. A method of controlling a digital subscriber loop telecommunications network (30, 32) for carrying data between a remote access server (42) and a plurality of individual network terminations (2) over connections which use electrical connections (32) for at least part of their length, comprising the steps of identifying radio frequencies used by wireless transmitters in the vicinity of each electrical connection, and controlling transmission frequencies carried over the respective digital subscriber loops to prevent transmission on frequencies in which nearby radio transmitters are operating, **characterised in that** data relating to the RF environment is collected at each of two or more nodes (1, 2) in the electrical part of the network, and such data is exchanged between the nodes.

6. A method according to claim 5, wherein the identification of radio frequencies is performed by the detection of vireless transmissions in the vicinity of the nodes.

7. A method according to claim 5 or claim 6 comprising the step of searching data bases (38, 56) for data relating to radio frequencies used by transmitters in the vicinity of the nodes.

8. A method according to claim 5, claim 6 or claim 7 wherein, in response to the identification of a radio transmitter or receiver operational at a particular RF frequency in the vicinity of a digital subscriber loop (30), a notch is placed at that frequency in the transmissions to be made over the respective digital subscriber loop (30).

## Patentansprüche

1. Dynamisches Leitungsmanagement-System (18) für ein Kommunikations-Netzwerk mit Digitalen Teilnehmer-Anschlussleitungen (30, 32) zum Übertragen von Daten zwischen einem RAS-Server (42) und einer Vielzahl von individuellen Netzwerk-Abschlussgeräten (2) über Verbindungen, bei denen elektrische Verbindungen (30) für mindestens einen Teil ihrer Länge benutzt werden, das ein Datensammelsystem (43, 57) zur Identifizierung von Funkfrequenzen, die durch Funksender in der Nähe jeder elektrischen Verbindung benützt werden, und ein Übertragungsmanagement-System (37) zum Management des Spektrums von Übertragungsfrequenzen aufweist, die über die entsprechenden Digitalen Teilnehmer-Anschlussleitungen übertragen werden, um Übertragung in Frequenzbereichen zu verhindern, in deren Nähe Funksender arbeiten,
**dadurch gekennzeichnet, dass** das Datensammelsystem (43, 57) bei jedem von zwei oder mehr Knoten (1, 2) in dem elektrischen Teil des Netzwerks Datensammelgeräte (13) zum Sammeln von Daten aufweist, die sich auf die Funkfrequenz-Umgebung bei den entsprechenden Knoten beziehen, und wobei jeder derartige Knoten ferner ein Datenaustauschsystem (35) aufweist, um zu ermöglichen, dass solche lokal an jedem Knoten gesammelten Daten zwischen den Knoten ausgetauscht werden.

2. System nach Anspruch 1, das einen Empfänger oder mehrere Empfänger (13) zur Erfassung von Funkübertragungen in der Nähe der Knoten aufweist.

3. System nach Anspruch 1 oder 2, das ein Datensammelsystem (56) zur Identifizierung und Speicherung von Daten aufweist, die sich auf Funkfrequenzen beziehen, die durch Sender in der Nähe der Knoten benützt werden.

4. System nach Anspruch 1, Anspruch 2 oder Anspruch 3, das einen Spektrum-Controller aufweist, der unter Ansprechen auf den Ausgang des dynamischen Leitungsmanagement-Systems ein Kerbfilter bei einer spezifizierten Frequenz in dem Hochfrequenz-Spektrum von über eine individuelle Digitale Teilnehmer-Anschlussleitung (30) durchzuführenden Übertragungen vorsieht als Antwort auf die Identifizierung eines Funksenders oder Funkempfängers, der bei dieser Frequenz in der Nähe der Digitalen Teilnehmer-Anschlussleitung (30) in Betrieb ist.

5. Verfahren zur Steuerung eines Kommunikations-Netzwerks mit Digitalen Teilnehmer-Anschlussleitungen (30, 32) zum Übertragen von Daten zwischen einem RAS-Server (42) und einer Vielzahl von individuellen Netzwerk-Abschlussgeräten (2) über Verbindungen, bei denen elektrische Verbindungen (32) für mindestens einen Teil ihrer Länge benutzt werden, das die folgenden Schritte umfasst: Identifizieren von Funkfrequenzen, die durch Funksender in der Nähe jeder elektrischen Verbindung benützt werden, und Steuern von Übertragungsfrequenzen, die über die entsprechenden Digitalen Teilnehmer-Anschlussleitungen übertragen werden, um Übertragung auf Frequenzen zu verhindern, in deren Nähe Funksender arbeiten,
**dadurch gekennzeichnet, dass** Daten, die sich auf die Funkfrequenz-Umgebung beziehen, bei jedem von zwei oder mehr Knoten (1, 2) in dem elektrischen Teil des Netzwerks gesammelt werden und solche Daten zwischen den Knoten ausgetauscht werden.

6. Verfahren nach Anspruch 5, bei dem die Identifizierung von Funkfrequenzen durch die Erfassung von Funkübertragungen in der Nähe der Knoten durchgeführt wird.

7. Verfahren nach Anspruch 5 oder Anspruch 6, das den Schritt des Durchsuchens von Datenbanken (38, 56) auf Daten umfasst, die sich auf Funkfrequenzen beziehen, die durch Sender in der Nähe der Knoten benützt werden.

8. Verfahren nach Anspruch 5, Anspruch 6 oder Anspruch 7, bei dem als Antwort auf die Identifizierung eines Funksenders oder Funkempfängers, der auf einer bestimmten Funkfrequenz in der Nähe einer Digitalen Teilnehmer-Anschlussleitung (30) in Betrieb ist, ein Kerbfilter bei dieser Frequenz in den über die betreffende Digitale Teilnehmer-Anschlussleitung (30) durchzuführenden Übertragungen vorgesehen wird.

## Revendications

1. Système (18) de gestion de ligne dynamique pour un réseau de télécommunications de boucles d'abonnés numériques (30, 32) pour transporter des données entre un serveur d'accès distant (42) et une pluralité de terminaisons (2) de réseau individuelles sur des connexions qui utilisent des connexions électriques (30) pour au moins une partie de leur longueur, comprenant un système (43, 57) de recueil de données pour identifier des fréquences radio utilisées par des émetteurs sans fil à proximité de chaque connexion électrique, et un système (37) de gestion de transmission pour gérer le spectre de fréquences de transmission transportées sur les boucles d'abonnés numériques respectives pour empêcher une transmission dans des plages de fréquences dans lesquelles des émetteurs radio proches fonctionnent,
**caractérisé en ce que** le système (43, 57) de recueil de données comprend, à chacun de deux noeuds (1, 2) ou plus dans la partie électrique du réseau, un appareil (13) de recueil de données pour un recueil de données se rapportant à l'environnement RF aux noeuds respectifs,
et dans lequel chaque tel noeud comprend également un système (35) d'échange de données pour permettre que de telles données recueillies localement pour chaque noeud soient échangées entre les noeuds.

2. Système selon la revendication 1, comprenant un ou plusieurs récepteurs (13) pour détecter des transmissions sans fil à proximité des noeuds.

3. Système selon la revendication 1 ou 2 comprenant un système (56) de recueil de données pour identifier et stocker des données se rapportant à des fréquences radio utilisées par des émetteurs à proximité des noeuds.

4. Système selon la revendication 1, la revendication 2 ou la revendication 3, comprenant un contrôleur de spectre répondant à la sortie du système de gestion de ligne dynamique pour placer une encoche à une fréquence spécifiée dans le spectre RF de transmissions devant être réalisées sur une boucle d'abonné numérique (30) individuelle, en réponse à l'identification d'un émetteur ou d'un récepteur radio opérationnel à cette fréquence à proximité de la boucle d'abonné numérique (30).

5. Procédé de contrôle d'un réseau de télécommunications de boucles d'abonnés numériques (30, 32) pour transporter des données entre un serveur d'accès distant (42) et une pluralité de terminaisons (2) de réseau individuelles sur des connexions qui utilisent des connexions électriques (32) pour au moins une partie de leur longueur, comprenant les étapes d'identification de fréquences radio utilisées par des émetteurs sans fil à proximité de chaque connexion électrique, et contrôler des fréquences de transmission transportées sur les boucles d'abonnés numériques respectives pour empêcher une transmission sur des fréquences dans lesquelles des émetteurs radio proches fonctionnent,
**caractérisé en ce que** des données se rapportant à l'environnement RF sont recueillies à chacun de deux noeuds (1, 2) ou plus dans la partie électrique du réseau, et de telles données sont échangées entre les noeuds.

6. Procédé selon la revendication 5, dans lequel l'identification de fréquences radio est effectuée par la détection de transmissions sans fil à proximité des noeuds.

7. Procédé selon la revendication 5 ou la revendication 6 comprenant l'étape de recherche dans des bases de données (38, 56) de données se rapportant à des fréquences radio utilisées par des émetteurs à proximité des noeuds.

8. Procédé selon la revendication 5, la revendication 6 ou la revendication 7 dans lequel, en réponse à l'identification d'un émetteur ou d'un récepteur radio opérationnel à une fréquence RF particulière à proximité d'une boucle d'abonné numérique (30), une encoche est placée à cette fréquence dans les transmissions devant être réalisées sur la boucle d'abonné numérique (30) respective.
